# EUROPEAN PATENT APPLICATION

(11) **EP 1 879 252 A1**
(43) Date of publication of application: **16.01.2008**
(21) Application number: 06731485.6
(22) Date of filing: 10.04.2006
(51) Int. Cl.: H01M 10/40, H01B 1/06, H01G 9/038, H01M 6/16

(54) **NONAQUEOUS ELECTROLYTE SOLUTION, ELECTROCHEMICAL ENERGY STORAGE DEVICE USING SAME, AND NONAQUEOUS ELECTROLYTE SECONDARY BATTERY**

(30) Priority: 19.04.2005 JP 2005120574
(71) Applicant: MATSUSHITA ELECTRIC INDUSTRIAL CO., LTD., Osaka 571-8501 (JP)
(72) Inventor: YOSHIZAWA, Hiroshi, Chuo-ku Osaka-shi Osaka 540-6207 (JP); DEGUCHI, Masaki, Chuo-ku Osaka-shi Osaka 540-6207 (JP); MATSUI, Tooru, Chuo-ku Osaka-shi Osaka 540-6207 (JP)
(74) Representative: Schwabe, Hans-Georg
(86) International application number: PCT/JP2006/307538
(87) International publication number: WO 2006/115023

(57) **Abstract**

A nonaqueous electrolyte solution being liquid at normal temperature, comprising (A) 1,2-dialkoxyethane represented by Formula: R-O-CH₂-CH₂-O-R' (wherein, R and R', which are same or different from each other, independently represent an unsubstituted or fluorine-substituted alkyl group having a carbon number of 3 or less) and (B) lithium bis[trifluoromethanesulfonyl]imide at a molar ratio [(A)/(B)] of 0.75 or more and 2 or less.

## Description

### TECHNICAL FIELD

The present invention relates to a nonaqueous electrolyte solution for use in electrical double-layer capacitor, secondary battery, and others and also to an electrochemical energy-storing device and a nonaqueous electrolyte solution secondary battery using the same.

### BACKGROUND ART

An electrical double-layer capacitor employing polarizable electrodes as its positive and negative electrodes stores electrochemical energy, by absorbing cations and anions present in the nonaqueous electrolyte solution on the electrode surface in the charge process. For that reason, a concentration of the ions in the nonaqueous electrolyte solution decreases in the charge process and thus, the resistance inside the electrical double-layer capacitor increases. Use of a nonaqueous electrolyte solution with a low ion concentration leads to decrease in the amount of the ions adsorbed and thus to decrease in the electric capacity stored in the electrical double-layer capacitor. Thus, it is necessary to raise the ion concentration in the nonaqueous electrolyte solution for improvement of the energy density of the electrical double-layer capacitor. And, it is possible to raise the charge voltage of the electrical double-layer capacitor and consequently to raise the energy density of the capacitor further, by using a nonaqueous solvent as the solvent for the electrolyte solution containing a supporting salt.

In a nonaqueous-electrolyte-solution battery for a primary or secondary battery having lithium as the active material, the lithium ions migrate between the positive and negative electrodes through the nonaqueous electrolyte solution. In this kind of nonaqueous electrolyte solution battery, the ion concentration in the nonaqueous electrolyte solution remains constant during discharge in primary battery and during charge and discharge in secondary battery. Thus, for improvement of the energy density of the nonaqueous electrolyte solution battery, it would be effective to increase the amounts of the positive and negative-electrode active materials and to decrease the amount of the nonaqueous electrolyte solution. It is also necessary to raise the ion concentration in the nonaqueous electrolyte solution, because, while the amount of the nonaqueous electrolyte solution is needed to be decreased, the amount of the ions migrating between positive and negative electrodes is required to be kept constant.

Typical examples of the nonaqueous solvent used in the nonaqueous electrolyte solution for such an electrical double-layer capacitor or a nonaqueous electrolyte solution battery include cyclic carbonates such as ethylene carbonate (hereinafter, referred to as EC), propylene carbonate (hereinafter, referred to as PC), and butylene carbonate (hereinafter, referred to as BC); cyclic esters such as y-butylolactone (hereinafter, referred to as γ-BL); linear carbonates such as dimethyl carbonate (hereinafter, referred to as DMC), ethylmethyl carbonate (hereinafter, referred to as EMC), and diethyl carbonate (hereinafter, referred to as DEC); and the like. The nonaqueous electrolyte solution is prepared by dissolving a lithium salt such as lithium hexafluorophosphate (LiPF₆), lithium tetrafluoroborate (LiBF₄), lithium perchlorate (LiClO₄), or lithium bis[trifluoromethanesulfonyl]imide (hereinafter, referred to as LiTFSI) in such a nonaqueous solvent. However, the concentration of the lithium salt dissolved in the nonaqueous electrolyte solution is normally as low as approximately 0.8 mole/kg. In production of a nonaqueous electrolyte solution having a high ion concentration, for example in an electrolyte solution containing LiBF₄ and EC, a molar ratio of 1:4 (2.2 mole/kg) is the maximum limit, considering the solubility of the lithium salt.

Accordingly, use of a 1,2-dialkoxyethane such as 1,2-dimethoxyethane (hereinafter, referred to as DME) as the nonaqueous solvent was proposed for further increase of the ionic concentration in the nonaqueous electrolyte solution. Specifically, proposed were a 6-mole/L nonaqueous electrolyte solution consisting of LiBF₄ and DME ([DME/LiBF₄] molar ratio: approximately 1/1) (Patent Document 1) and a 6-mole/L nonaqueous electrolyte solution consisting of LiBF₄, DME, and 1-ethoxy-2-methoxyethane (hereinafter, referred to as EME)([(DME+EME)/LiBF₄] molar ratio: approximately (0.5+0.5)/1) (Patent Document 2).

However, detailed studies by the inventors on these nonaqueous electrolyte solutions showed that, when LiBF₄ was used as the lithium salt, a nonaqueous electrolyte solution at a DME/LiBF₄ molar ratio of 1/1 was in the supersaturated state at normal temperature. Thus, when left still, the nonaqueous electrolyte solution resulted in precipitation of crystal probably of LiBF₄. In addition, a nonaqueous electrolyte solution of DME/LiBF₄ at a molar ratio of 1/1 and a nonaqueous electrolyte solution of (DME+EME)/LiBF₄ at a molar ratio of (0.5+0.5)/1 were unstable even at normal temperature, and the solution, when left, changed from transparent and colorless to between yellow and brown in color by decomposition of 1,2-dialkoxyethane Patent Document 2 discloses LiPF₆, lithium trifluoromethanesulfonate (LiCF₃SO₃), lithium hexafluoroantimonate (LiSbF₆), lithium hexafluoroarsenate (LiAsF₆) and the like, in addition to LiBF₄ as examples of the lithium salt. However, even when a nonaqueous electrolyte solution with a high ion concentration, for example at a 1,2-dialkoxyethane/lithium salt molar ratio of 1/1, was prepared by using such a salt, the lithium salt was not soluble, the nonaqueous electrolyte solution prepared was changed in color similarly to the LiBF₄-containing solution, or the nonaqueous electrolyte solution was solidified at normal temperature, and thus, it was difficult to use it as a nonaqueous electrolyte solution for electrochemical energy-storing device..

In particular, in a nonaqueous-electrolyte-solution secondary battery employing a graphite material inserting and extracting lithium ions as the negative-electrode active material, if DME, a kind of 1,2-dialkoxyethane, or the mixed solvent thereof was used as the nonaqueous solvent for the electrolyte solution, it is known that no lithium ions were inserted into the graphite interlayer even in a low ion concentration of the nonaqueous electrolyte solution containing LiClO₄ at approximately 1 M (Nonpatent Literature 1). It is probably because of decomposition of DME on graphite. Accordingly, electrochemical insertion of lithium ions into graphite material does not occur in a DME-containing nonaqueous electrolyte solution, and thus, 1,2-dialkoxyethanes such as DME have been considered unfavorable as a nonaqueous electrolyte solution for use in the nonaqueous-electrolyte-solution secondary-battery using a graphite material as the negative-electrode active material. Separately, the inventors have conducted studies on the use of a nonaqueous electrolyte solution with a high ion concentration in the composition at a EME/LiBF₄ molar ratio of 1/1 for a nonaqueous-electrolyte-solution secondary battery having a negative electrode of a graphite material, and found a problem that the lithium ions solvated by EME are inserted into the graphite interlayer in a early charged stage, destroying the graphite structure and thus inhibiting the electrochemical potential of the negative electrode from lowering. The early charged stage above is a stage where lithium ions are first inserted electrochemically into the graphite interlayer in the state without lithium between the interlayers.
Patent Document 1: Japanese Unexamined Patent Publication No. Hei 1-107468
Patent Document 2: Japanese Unexamined Patent Publication No, Hei 3-84871
Nonpatent Literature 1: Zenichiro Takehara Ed., "High-density lithium secondary battery", Rev. 1, Techno Systems Co., Ltd., March 14, 1998, p.184 to 185

### SUMMARY OF THE INVENTION

An object of the present invention, which was made to solve the problems above, is to provide a nonaqueous electrolyte solution having a high ion concentration superior in stability, and an electrochemical energy-storing device and a nonaqueous-electrolyte-solution secondary battery having a high-energy density by using the same.

An aspect of the present invention is a nonaqueous electrolyte solution being liquid at normal temperature, comprising (A) 1,2-dialkoxyethane represented by Formula: R-O-CH₂-CH₂-O-R' (wherein, R and R', which are same or different from each other, independently represent an unsubstituted or fluorine-substituted alkyl group having a carbon number of 3 or less) and (B) lithium bis[trifluoromethanesulfonyl]imide (LiTFSI) at a molar ratio [(A)/(B)] of 0.75 or more and 2 or less.

The objects, features, aspects, and advantages of the present invention will become more evident in the following detailed description and the drawings attached.

### BREIF DESCRIPTION OF THE DRAWINGS

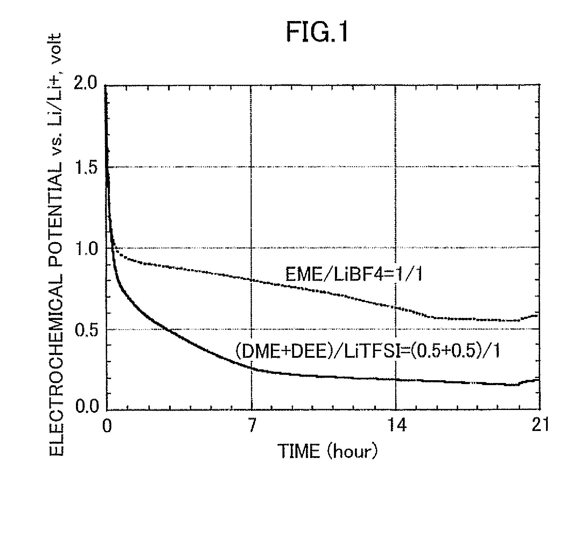

[Figure 1] Figure 1 is a graph showing the charge characteristics of a graphite negative electrode in the nonaqueous electrolyte solutions obtained in Example 3 and Comparative Example 2 of the present invention.

### DESCRIPTION OF THE PREFERRED EMBODIMENTS

The nonaqueous electrolyte solution according to the present embodiment is an electrolyte solution that is liquid at room temperature, containing (A) 1,2-dialkoxyethane represented by Formula: R-O-CH₂-CH₂-O-R' (wherein, R and R' , which are same or different from each other, independently represent an unsubstituted or fluorine-substituted alkyl group having a carbon number of 3 or less) and (B) lithium bis[trifluoromethanesulfonyl]imide (LiTFSI) at a molar ratio [(A)/(B)] of 0.75 or more and 2 or less.

The nonaqueous electrolyte solution according to the present embodiment remains in the liquid state at normal temperature even at a high ion concentration and is stable even at a high temperature of 60°C. It is probably because the bis[trifluoromethanesulfonyl]imide ion (hereinafter, referred to as TFSI ion) contained in the nonaqueous electrolyte solution has a molecular structure allowing flexible molecular movement such as rotational or bending movement of its functional groups and thus, the nonaqueous electrolyte solution is resistant to crystallization because of the molecular movement.

In contrast, if traditionally commonly used LiBF₄ is applied as the lithium salt, the BF₄ ion contained in the nonaqueous electrolyte solution reacts with active hydrogen atom-containing impurities such as water, if present even in trace amounts in the nonaqueous electrolyte solution, generating hydrogen fluoride (HF). HF generated decomposes the 1,2-dialkoxyethane, leading to discoloration of the electrolyte solution, and the decomposition products react with the electrode when the decomposition is drastic. The decomposition deteriorates the capacity and other properties of the electrochemical energy-storing device. However, the TFSI ion was found to make it difficult to generate HF even in such a nonaqueous electrolyte solution containing active hydrogen atom-containing impurities such as water. Accordingly, the nonaqueous electrolyte solution containing TFSI ion according to the present embodiment, which has an acidity of almost neutral, is resistant to decomposition of the 1,2-dialkoxyethane and thus, gives a stable nonaqueous electrolyte solution.

In case of a nonaqueous-electrolyte-solution battery having a negative electrode containing graphite as the negative-electrode active material, in the nonaqueous electrolyte solution containing 1,2-dialkoxyethane as the nonaqueous solvent and only LiBF₄ as the lithium salt, the graphite structure is broken down irrespective of the ion concentration, but, in the nonaqueous electrolyte solution according to the present embodiment containing 1,2-dialkoxyethane as the nonaqueous solvent and LiTFSI as the lithium salt, insertion and extraction of lithium ions into and out of graphite interlayer were found to proceed more smoothly rather at the high ion concentration. Although the reason is not clear, it is considered that the nonaqueous electrolyte solution containing dissolved LiTFSI at the higher concentration reduces the amount of the unsolvated free 1,2-dialkoxyethane which is reactive with graphite.

In the embodiment, the content ratio of (A) 1,2-dialkoxyethane represented by Formula: R-O-CH₂-CH₂-O-R' to (B) lithium bis[trifluoromethanesulfonyl]imide, [(A)/(B)] by mole, in the nonaqueous electrolyte solution is 0.75 or more and 2 or less.

At a molar ratio (A)/(B) of more than 2, even when LiTFSI is used as the lithium salt, lithium ions solvated with the nonaqueous solvent are inserted into the graphite interlayer, leading to decomposition of the graphite structure and decrease of the lithium ion concentration in the nonaqueous electrolyte solution, and thus, decrease in advantageous effect for using in a high-energy density electrochemical energy-storing device. Differently from conventional nonaqueous electrolyte solutions in combination of a lithium salt such as LiBF₄ and a 1,2-dialkoxyethane, the nonaqueous electrolyte solution according to the present embodiment in combination of LiTFSI and a 1,2-dialkoxyethane makes it possible to occur reliable insertion of lithium ions into graphite when the molar ratio (A)/(B) is 2 or less, for the following reasons: In a high-concentration nonaqueous electrolyte solution at a molar ratio (A)/(B) of 2 or less, TFSI ion, not the 1,2-dialkoxyethane, is decomposed preferentially by reduction on the graphite. As a result, a lithium ion-conductive film is seemingly formed on the graphite, preventing co-insertion of the 1,2-dialkoxyethane into the graphite interlayer in the charge process. On the other hand, a nonaqueous electrolyte solution at a molar ratio (A)/(B) of less than 0.75 cannot remain in the solution state providing substantially no insoluble matter at normal temperature, even if it contains a 1,2-dialkoxyethane as the nonaqueous solvent. For that reason, the molar ratio (A)/(B) in the present embodiment should be 0.75 or more and 2 or less, preferably closer to 1. The normal temperature in the present embodiment means a temperature range of 25 to 30°C.

Typical examples of the 1,2-dialkoxyethanes for use in the present embodiment include the followings:

1,2-dimethoxyethane (DME), 1-ethaxy-2-methoxyethane (hereinafter, referred to as EME), 1-methoxy-2-trifluoroethoxyethane (hereinafter, referred to as MTFEE), 1,2-diethoxyethane (hereinafter, referred to as DEE), 1-ethoxy-2-trifluoroethoxyethane (hereinafter, referred to as ETFEE), 1,2-bis[trifluoroethoxy]ethane (hereinafter, referred to as BTFEE), and 1,2-dipropoxyethane (hereinafter, referred to as DPE).

These 1,2-dialkoxyethanes may be used alone or in combination of two or more. In particular, use of DEE as the 1,2-dialkoxyethane is preferable, because it makes the nonaqueous electrolyte solution liquid in a wide range of composition at normal temperature and generates the nonaqueous electrolyte solution having high ion concentration. For example, when a 1,2-dialkoxyethane, wherein the groups R and R' are unsubstituted alkyl groups, such as DME or EME is used as the nonaqueous solvent, combined use of DEE is preferable. In such a case, the content ratio of DEE to the 1,2-dialkoxyethane having unsubstituted alkyl groups other than DEE, i.e., the molar ratio [1,2-dialkoxyethane having unsubstituted alkyl groups other than DEE/DEE], is preferably 1 or less.

In the embodiment, the number of carbons of the group R or R' in the 1,2-dialkoxyethane represented by Formula: R-O-CH₂-CH₂-O-R' is 3 or less, more preferably 2 or less. When the carbon number is more than 3, the solubility of LiTFSI is decreased, making it difficult to produce the electrolyte solution having higher concentration. Because a nonaqueous solvent smaller in molecular weight gives the electrolyte solution at higher concentration, the group R or R' is preferably a group selected from the group consisting of CH₃, C₂H₅, CF₃, and CH₂CF₃.

Also in the embodiment, a 1,2-dialkoxyethane wherein at least one of the groups R and R' is CH₂CF₃, such as MTFEE, ETFEE, or BTFEE having terminal CH₂CF₃ groups, is preferable, because it has a higher anti-oxidative potential because of the electron-withdrawing effect of the fluorine atom in the fluorine-substituted alkyl group and thus, allows use of high charge voltage. The nonaqueous electrolyte solution containing the 1,2-dialkoxyethane having such a fluorine-substituted alkyl group often lowers in reduction resistance, and thus, is used preferably in combination with a 1,2-dialkoxyethane wherein the groups R and R' are unsubstituted alkyl groups. The 1,2-dialkoxyethane having unsubstituted alkyl groups is preferably at least one selected from DME, DEE, and EME. The mixing ratio of the 1,2-dialkoxyethane having at least one fluorine-substituted alkyl group to the 1,2-dialkoxyethane having unsubstituted alkyl groups, i.e., a molar ratio of [1,2-dialkoxyethane having fluorine-substituted alkyl group/1,2-dialkoxyethane having unsubstituted alkyl groups], is preferably 0.1 or more and 1 or less.

The nonaqueous electrolyte solution according to the present embodiment may contain a cyclic carbonate such as EC in addition to the 1,2-dialkoxyethane alone or a mixture thereof as the nonaqueous solvent. Further, a cyclic or linear carbonate having an unsaturated C=C bond may be added to the nonaqueous electrolyte solution. Addition of such a carbonate results in formation of a favorable film on the negative electrode surface and in improvement in the charge/discharge cycle characteristics of the electrochemical energy-storing device. The addition amount of the other nonaqueous solvents is preferably smaller by mole than the total amount of the 1,2-dialkoxyethane in the nonaqueous electrolyte solution for preservation of the high ion concentration, and a molar ratio [carbonate compound/1,2-dialkoxyethane] of 0,05 or more and 0.1 or less is more preferable.

Examples of the cyclic carbonates having an unsaturated C=C bond include vinylene carbonate (hereinafter, referred to as VC), vinylethylene carbonate (hereinafter, referred to as Vec), divinylethylene carbonate (hereinafter, referred to as DVec), phenylethylene carbonate (hereinafter, referred to as Pec), diphenylethylene carbonate (hereinafter, referred to as DPec), and the like, and Vec and Pec are particularly preferable.

Examples of the linear carbonates having an unsaturated C=C bond include methylvinyl carbonate (hereinafter, referred to as MVC), ethylvinyl carbonate (hereinafter, referred to as EVC), divinyl carbonate (hereinafter, referred to as DVC), allylmethyl carbonate (hereinafter, referred to as AMC), allylethyl carbonate (hereinafter, referred to as AEC), diallyl carbonate (hereinafter, referred to as DAC), allylphenyl carbonate (hereinafter, referred to as APC), diphenyl carbonate (hereinafter, referred to as DPC), and the like, and DAC, APC, and DPC are particularly preferable.

The nonaqueous electrolyte solution according to the present embodiment contains lithium bis[trifluoromethanesulfonyl]imide (LiTFSI) as the lithium salt; and may contain additionally a lithium salt such as LiPF₆, LiBF₄, LiClO₄, lithium bis[pentafluoroethanesulfonyl]imide (hereinafter, referred to as LiBETI), lithium [trifluoromethanesulfonyl] [nonafluorobutanesulfonyl]imide (hereinafter, referred to as LiMBSI), lithium cyclohexafluoropropane-1,3-bis[sulfonyl]imide (hereinafter, referred to as LiCHSI), lithium bis[oxalate (2-)]borate (hereinafter, referred to as LiBOB), lithium trifluoromethyltrifluoroborate (LiCF₃BF₃), lithium pentafluoroethyltrifluoroborate (LiC₂F₅BF₃), lithium heptafluoropropyltrifluoroborate (LiC₃F₇BF₃), lithium tris[pentafluoroethyl]trifluorophosphate [Li(C₂F₅)₃PF₃], or the like; and among them, combined use of at least one lithium salt selected from the group consisting of LiPF₆, LiBF₄, LiBETI, LiMBSI, LiCHSI, LiBOB, LiCF₃BF₃, and LiC₂F₅BF₃ is preferable. The mixing rate of the lithium salts is determined properly, to make the nonaqueous electrolyte solution liquid consistently at normal temperature, but is preferably 0.01 or more and 0.2 or less in the molar ratio of the other lithium salts to LITFSI. Particularly in a nonaqueous-electrolyte-solution battery, the nonaqueous electrolyte solution containing only LiTFSI as the lithium salt often corrodes aluminum in the positive-electrode current collector, but a fluoride-based lithium salt such as LiPF₆, which forms a passive film of AlF₃, for example, on aluminum, is preferably used in combination for prevention of the corrosion. Combined use of LiBOB is also favorable for prevention of deterioration caused by the aluminum ion eluted from the positive electrode..

The electrochemical energy-storing device according to the present embodiment has a positive electrode, a negative electrode, and the nonaqueous electrolyte solution above. As described above, the nonaqueous electrolyte solution according to the present embodiment remains liquid consistently even at the high ion concentration at normal temperature, and thus, gives an electrochemical energy-storing device with high-energy density, when used in an electrochemical energy-storing device such as electrical double-layer capacitor or nonaqueous-electrolyte-solution battery.

In particular, the nonaqueous electrolyte solution according to the present embodiment is used favorably in a nonaqueous-electrolyte-solution secondary battery having a negative electrode containing graphite as the negative-electrode active material. As described above, in the nonaqueous electrolyte solution according to the present embodiment, insertion of solvated lithium ions into the graphite interlayer in the earlier charge phase is prevented, and thus, a nonaqueous-electrolyte-solution secondary battery with high-energy density is obtained.

Examples of the graphites for use as the negative-electrode active material in the nonaqueous-electrolyte-solution secondary battery according to the present embodiment include natural graphites, synthetic graphites, and highly crystalline carbon materials similar to graphite such as mesophased pitch graphite fiber, graphitized mesocarbon micro bead, gas-phase -growth carbon fiber, graphite whisker, and the like; and among them, graphites having a crystal structure having an interlayer distance of approximately 3.5Å or less that would allow increase in energy density are preferable.

The negative electrode of the nonaqueous - electrolyte -solution secondary battery is prepared by coating a paste prepared by mixing the negative-electrode active material, a binder, and as needed a thickener and a conductive substance in a solvent such as N-methyl-2-pyrrolidone (NMP), for example, on a copper current collector to a particular thickness and by drying, pressing and cutting the substrate.

Any known material may be used as the material for the positive electrode of the nonaqueous electrolyte solution secondary battery according to the present embodiment. Typical examples of the positive electrode active materials include lithium cobaltate, lithium nickelate, lithium manganate, mixed oxides such as lithium iron phosphate, and the like.

The positive electrode of the nonaqueous-electrolyte-solution secondary battery is prepared by coating a paste prepared by mixing the positive electrode active material, a binder, and as needed a thickener and a conductive substance in a solvent such as NMP, for example, on an aluminum current collector to a particular thickness and by drying, pressing and cutting the substrate.

The nonaqueous-electrolyte-solution secondary battery according to the present embodiment is prepared in the steps of placing the positive and negative electrodes prepared as described above at a position facing each other separated by a separator, forming an electrode unit containing the electrodes wound or laminated, placing the electrode unit and the nonaqueous electrolyte solution in a battery casing, and sealing the battery casing.

In the present embodiment described so far in details, all description is provided here only to illustrate the present invention by way of exemplary embodiments, and thus the present invention is not limited thereto. It should be understood that numerous modifications not exemplified here are also possible in the scope of the present invention.

Hereinafter, the present invention will be described with reference to Examples, but it should be understood that the present invention is not limited by these Examples.

### EXAMPLES

### (Example 1)

The influence on high-temperature stability of a nonaqueous electrolyte solution by the kind of the lithium salt used was studied. DME, DEE, and LiTFSI were mixed at a (DME+DEE)/LiTFSI molar ratio of (0.5+0.5)/1, to give a nonaqueous electrolyte solution. The liquid obtained was transparent at normal temperature.

The nonaqueous electrolyte solution prepared was placed and sealed tightly in a container of a tetrafluoroethylene-perfluoroalkyl vinylether copolymer resin (hereinafter, referred to as PFA), and the PFA container was enclosed and sealed in an aluminum laminate bag. After the container was left at 60°C for 10 days, the change in color tone of the nonaqueous electrolyte solution was determined. As a result, the nonaqueous electrolyte solution of Example 1 remained in the transparent state.

### (Comparative Example 1)

EME and LiBF₄ were mixed at an EME/LiBF₄ molar ratio of 1/1, to give a nonaqueous electrolyte solution of Comparative Example 1. The liquid obtained was transparent at normal temperature. The nonaqueous electrolyte solution prepared was placed and sealed tightly in a PFA container in a similar manner to Example 1, and the PFA container was enclosed and sealed in an aluminum laminate bag. After the container was left at 60° C for 10 days, the change in color tone of the nonaqueous electrolyte solution was determined- As a result, the nonaqueous electrolyte solution of Comparative Example 1 changed in color to dark orange.

These evaluation results are summarized in Table 1.

**TABLE.1**

| | CHANGE IN COLOR TONE |
|---|---|
| EME/LiBF₄ =1/1 | DARK ORANGE |
| (DME+DEE) /LiTFSI=(0.5+0.5)/1 | NONE |

Table 1 shows that the nonaqueous electrolyte solution using LiTFSI according to the present embodiment showed no change in color tone and was thus stable even after storage at high temperature. On the other hand, the nonaqueous electrolyte solution of Comparative Example 1 showed discoloration to dark orange. The discoloration was considered to be caused by decomposition of the 1,2-dialkoxyethane due to HF.

The results show that it is possible to obtain the nonaqueous electrolyte solution resistant to decomposition of the 1,2-dialkoxyethane even at high temperature by using LiTFSI as the lithium salt, and thus, to obtain an electrochemical energy-storing device superior in high-temperature storage characteristics.

A mixed solvent of DME and DEE was used as the nonaqueous solvent in Example 1, while a single solvent EME was used as the nonaqueous solvent in Comparative Example 1, because there was no common solvent composition available that dissolves LiTFSI or LiBF₄ at the high ion concentration above.

### (Example 2)

LiTFSI and a various kind of 1,2-dialkoxyethane were mixed at a varying molar ratio. Table 2 shows the composition of the nonaqueous electrolyte solutions that were liquid at normal temperature. Each nonaqueous electrolyte solution prepared was left at 60°C for 10 days in a similar manner to Example 1, and change in color tone after storage was determined.

**TABLE.2**

| | CHANGE IN COLOR TONE |
|---|---|
| DEE/LiTFSI =0.75/1 | NONE |
| (DME+DEE) /LiTFSI=(0.5+0,5)/1 | NONE |
| (DME+ETFEE)/LiTFSI=(0 5+0.5)/1 | NONE |
| (DME+BTFEE)/LiTFSI=(0.6+0,4)/1 | NONE |
| (EME+DEE)/LiIFSI=(0.2+0.8)/1 | NONE |
| DEE/LiTFSI =1/1 | NONE |
| (DEE+MTFEE)/LiTFSI=(0.8+0.2)/1 | NONE |
| (DEE+ETFEE)/LiTFSI=(0,5+0.5)/1 | NONE |
| (DEE+BTFEE)/LiTFSI=(0.7+0.3)/1 | NONE |
| DME/LiTFSI =2/1 | NONE |
| DEE/LiTFSI =2/1 | NONE |
| DPE/LiTFSI =2/1 | NONE |

As shown in Table 2, the nonaqueous electrolyte solutions according to the present embodiment containing the 1,2-dialkoxyethane as the nonaqueous solvent and LiTFSI as the lithium salt were all liquid at normal temperature, and stable enough to show no change in color tone, even when the molar ratio of the total 1,2-dialkoxyethanes to LiTFSI is in a high concentration range of 0.75 to 2.

On the other hand, in a nonaqueous electrolyte solution in the composition not shown in Table 2, the nonaqueous electrolyte solution using DEE as the nonaqueous solvent did not allow to dissolve entire LiTFSI to dissolve, if the DEE/LiTFSI molar ratio is 0.5/1.

The nonaqueous electrolyte solutions in the composition at a 1,2-dialkoxyethane/LiTFSI molar ratio of 1/1, wherein only DME or EME was used as the 1,2-dialkoxyethane, were often solid at normal temperature, while the nonaqueous electrolyte solutions using a mixed solvent at a DEE molar ratio of 0.5 or more ([DME or EME/DEE] molar ratio: 1 or less) as the nonaqueous solvent were liquid. Accordingly, if an electrolyte solution contains only a 1,2-dialkoxyethane having only unsubstituted groups as R and R' as the nonaqueous solvent, it is preferable to use DEE additionally in order to obtain the electrolyte solution liquid at normal temperature.

In addition, the nonaqueous electrolyte solutions containing only the 1,2-dialkoxyethane having terminal alkyl groups of 3 or more carbon atoms such as DPE showed lower solubility of LiTFSI. Thus, for preparation of a nonaqueous electrolyte solution at a high concentration of a 1,2-dialkoxyethane/LiTFSI molar ratio of 1 or less, it is preferable to use the 1,2-dialkoxyethane having terminal alkyl groups with a carbon number of two or less.

### (Example 3)

The efficiency of lithium-ion insertion into the graphite material in the nonaqueous electrolyte solution according to the present embodiment was studied in the following manner:

A synthetic graphite powder (MAG-D, manufactured by Hitachi Chemical) was used as the negative-electrode active material inserting and extracting lithium ions by charge and discharge.

The negative electrode plate was prepared in the following manner: First, 75 parts by mass of a synthetic graphite powder, 20 parts by mass of acetylene black as a conductive substance, 5 parts by mass of polyvinylidene fluoride resin as a binder, and dehydrated N-methyl-2-pyrrolidone as a dispersion solvent were mixed. The mixture was then coated on one side of a copper-foil current collector having a thickness of 20 µm and dried, to form an active material layer having a thickness of 80 µm. The copper-foil current collector carrying the active material layer formed was then cut into pieces of 35 mmx35 mm in size, and a copper current collector plate of 0.5 mm in thickness having a lead was welded onto the obtained copper-foil current collector by ultrasonication, to give a negative electrode plate.

Separately, DME, DEE and LiTFSI were mixed at a (DME+DEE)/LiTFSI molar ratio of (0.5+0.5)/1, to give a nonaqueous electrolyte solution.

While the negative electrode plate thus prepared was used as the test electrode and lithium metal foils as the counter electrode and reference electrode, lithium ions were allowed to insert electrochemically into the synthetic graphite powder in the nonaqueous electrolyte solution prepared. The insertion condition was 0.03 mA/cm² at 20°C.

Figure 1 is a graph showing the change in electrochemical potential when a cathodic current of 60 mAh/g was applied to the synthetic graphite powder. In Figure 1, the electrochemical potential after current flow in the nonaqueous electrolyte solution of the present Example was approximately 0.2 V, indicating that the lithium ions were inserted into the graphite interlayer, forming a third stage structure. Thus, it is possible to make lithium ions insert reliably in the nonaqueous electrolyte solution containing the 1,2-dialkoxyethane as the nonaqueous solvent and LiTFSI as the lithium salt at higher concentrations.

### (Comparative Example 2)

A negative electrode plate of synthetic graphite powder was prepared in a similar manner to Example 3.

Separately, EME and LiBF₄ were mixed at an EME/LiBF₄ molar ratio of 1/1, to give a nonaqueous electrolyte solution.

Lithium ions were allowed to insert electrochemically into the synthetic graphite powder in the nonaqueous electrolyte solution prepared, while the negative electrode plate thus prepared was used as the test electrode and lithium metal foils as the counter electrode and reference electrode. The insertion condition was 0.03 mA/cm² at 20°C.

Figure 1 is a graph showing the change in electrochemical potential when a cathodic current of 60 mAh/g was applied to the synthetic graphite powder. In Figure 1, the electrochemical potential after current flow in the nonaqueous electrolyte solution of the present Comparative Example did not decrease to the electrochemical potential indicating formation of a third stage structure, showing that no insertion of lithium ions occurred. It is presumably because EME-solvated lithium ions, not lithium ions alone, were inserted into the graphite interlayer, destroying the graphite layer structure.

Accordingly, the nonaqueous electrolyte solution according to the present embodiment containing the 1,2-dialkoxyethane as the nonaqueous solvent and LiTFSI at the high ion concentration is applicable to nonaqueous-electrolyte-solution secondary batteries such as lithium-ion secondary battery having a negative electrode of a graphite material inserting and extracting lithium ions.

### (Example 4)

A lithium ion battery containing the nonaqueous electrolyte solution according to the present embodiment was prepared, and the battery characteristics thereof were evaluated in the following manner: LiFePO₄ was used as the positive electrode active material inserting and extracting lithium ions by charge and discharge. The positive electrode plate was prepared in the following manner: First, 85 parts by mass of LiFePO₄ powder, 10 parts by mass of acetylene black as a conductive substance, and 5 parts by mass of polyvinylidene fluoride resin as a binder were mixed, and the mixture was dispersed in dehydrated N-methyl-2-pyrrolidone, to give a slurry-state positive electrode mixture.. The positive electrode mixture was coated on a positive-electrode current collector of aluminum foil, dried and pressed, to form an active material layer. Then, the aluminum-foil current collector carrying the active material layer was cut into pieces of 35 mm×35 mm in size. An aluminum current collector plate of 0.5 mm in thickness having a lead was welded onto the obtained aluminum-foil current collector by ultrasonic irradiation, to give a positive electrode plate.

A negative electrode plate of synthetic graphite powder was prepared in a similar manner to Example 3.

Separately, DME, DEE and LiTFSI were mixed at a (DME+DEE)/LiTFSI molar ratio of (0.5+0.5)/1, to give a nonaqueous electrolyte solution.

The positive electrode plate and the negative electrode plate are placed at a position facing each other and holding a polypropylene nonwoven fabric in between, and the positive and negative electrode plates were bound and integrated with a tape, to give an electrode unit. Then, the electrode unit was placed in a tube-shaped aluminum laminate bag having openings at both ends, and one opening in the lead region-sided end was sealed by welding. The nonaqueous electrolyte solution prepared was then added dropwise through the other opening.

After the dropwise addition, the bag was deaerated at 1300 Pa for 5 seconds. The liquid injection-sided opening was sealed by welding, to give a lithium ion battery.

The lithium-ion battery thus prepared was charged and discharged under the condition of 20°C, 0.03 mA/cm², the upper limit voltage of 4.0 V, and the lower limit voltage of 2.8 V. The discharge capacity after 10 cycles was 122 mAh/g. Here, "g" represents the unit weight of LiFePO₄.

### (Example 5)

A lithium-ion battery was prepared in a similar manner to Example 4, except that a nonaqueous electrolyte solution prepared by mixing DME and LiTFSI at a DME/LiTFSI molar ratio of 2/1 was used.

The lithium-ion battery thus prepared was charged and discharged under the condition of 20°C, 0.03 mA/cm², the upper limit voltage of 4.0 V, and the lower limit voltage of 2.8 V The discharge capacity after 10 cycles was 115 mAh/g. The discharge capacity of the battery of the present Example was slightly lower than that of the battery of Example 4, because DME-solvated lithium ions in a small amount were inserted into the interlayer of the negative-electrode active material, synthetic graphite powder.

### (Comparative Example 3)

A lithium-ion battery was prepared in a similar manner to Example 4, except that a nonaqueous electrolyte solution prepared by mixing DME and LiTFSI at a DME/LiTFSI molar ratio of 3/1 was used.

The lithium-ion battery thus prepared was charged and discharged under the condition of 20°C, 0.03 mA/cm², the upper limit voltage of 4.0 V, and the lower limit voltage of 2.8 V. The discharge capacity after 10 cycles was 65 mAh/g. The discharge capacity of the battery of the present Example was about 1/2 of that of the battery of Example 4, because DME-solvated lithium ions were inserted into the interlayer of the negative-electrode active material, synthetic graphite powder, destroying the graphite structure.

The results above show that the ratio of the 1,2-dialkoxyethane to LiTFSI not destroying the graphite structure is 2 or less in 1,2-dialkoxyethane/LiTFSI molar ratio.

### (Comparative Example 4)

A lithium-ion battery was prepared in a similar manner to Example 4, except that a nonaqueous electrolyte solution prepared by mixing EME and LiBF₄ at an EME/LiBF₄ molar ratio of 1/1 was used.

The lithium-ion battery thus prepared was charged and discharged under the condition of 20°C, 0.03 mA/cm², the upper limit voltage of 4.0 V, and the lower limit voltage of 2.8 V. The discharge capacity after 10 cycles was 17 mAh/g. The discharge capacity of the battery of the present Example was about 1/7 of that of the battery of Example 4, because EME-solvated lithium ions were inserted into the interlayer of the negative-electrode active material, synthetic graphite powder, destroying the graphite structure.

The results above show that it is possible to obtain a lithium-ion battery with high-energy density without causing destruction of the graphite structure, by using the nonaqueous electrolyte solution according to the present embodiment containing LiTFSI in the 1,2-dialkoxyethane at the higher concentration

### (Example 6)

The properties of a lithium-ion secondary battery having a nonaqueous electrolyte solution containing a 1,2-dialkoxyethane and a cyclic carbonate compound or an unsaturated C=C carbonate compound as the nonaqueous solvent were determined in the following manner:

A lithium-ion battery was prepared in a similar manner to Example 4, except that the following three kinds of nonaqueous electrolyte solutions in the compositions below were used. The first electrolyte solution was a nonaqueous electrolyte solution containing DEE and LiTFSI at a DEE/LiTFSI molar ratio of 1/1, and the lithium-ion battery using the nonaqueous electrolyte solution is the battery of Example 6A. The second electrolyte solution was a nonaqueous electrolyte solution containing DEE, EC and LiTFSI at a DEE/EC/LiTFSI molar ratio of 0.9/0.1/1, and the lithium-ion battery using the nonaqueous electrolyte solution is the battery of Example 6B. The third electrolyte solution was a nonaqueous electrolyte solution containing DEE, EC, LiTFSI and Vec at a DEE/EC/LiTFSI/Vec molar ratio of 0.9/0.09/1/0.01, and the lithium-ion battery using the nonaqueous electrolyte solution is the battery of Example 6C.

Each lithium-ion battery thus prepared in Example 6A, 6B or 6C was charged and discharged under the condition of 20°C, 0.03 mA/cm², the upper limit voltage of 4.0 V, and the lower limit voltage of 2.8 V The cycle retention rate, i.e., a value of the discharge capacity in the 100th cycle divided by the 10th-cycle discharge capacity, was evaluated in each battery.

The cycle retention rate of the lithium-ion battery of Example 6A was 0.83; that of Example 6B, 0,92; and that of Example 6C, 0.94. The results above show that the nonaqueous electrolyte solutions according to the present embodiment containing EC and Vec improve the cycle retention rate of the lithium-ion battery.

### (Example 7)

The properties of a lithium-ion battery having a nonaqueous electrolyte solution containing the 1,2-dialkoxyethane having a fluorine-substituted alkyl group (-CH₂CF₃ group) on one terminal and the 1,2-dialkoxyethane having unsubstituted alkyl group as the nonaqueous solvent and an other lithium salt in addition to LiTFSI were studied in the following manner:

A lithium-ion battery was prepared in a similar manner to Example 4, except that the following three kinds of nonaqueous electrolyte solutions in the compositions below were used. The first electrolyte solution was a nonaqueous electrolyte solution containing DME, ETFEE and LiTFSI at a (DME+ETFEE)/LiTFSI molar ratio of (0.5+0.5)/1, and the lithium-ion battery using the nonaqueous electrolyte solution is the battery of Example 7A. The second electrolyte solution was a nonaqueous electrolyte solution containing DME, ETFEE, LiTFSI and LIPF₆ at a (DME+ETFEE)/LiTSI/LiPF₆ molar ratio of (0.5+0.5)/0.99/0.01, and the lithium-ion battery using the nonaqueous electrolyte solution is the battery of Example 7B. The third electrolyte solution was a nonaqueous electrolyte solution containing DME, ETFEE, LiTFSI and LiBOB at a (DME+ETFEE)/LiTFSI/LiBOB molar ratio of (0.5+0.,5)/0.99/0.01, and the lithium-ion battery using the nonaqueous electrolyte solution is the battery of Example 7C.

Each lithium-ion battery thus prepared in Example 7A, 7B or 7C was charged and discharged under the condition of 20°C, 0.03 mA/cm², the upper limit voltage of 4.0 V, and the lower limit voltage of 2.8 V The cycle retention rate, i.e., a value of the discharge capacity in the 100th cycle divided by the 10th-cycle discharge capacity, was evaluated in each battery.

The cycle retention rate of the lithium ion battery of Example 7A was 0.77; that of Example 7B, 0.85; and that of Example 7C, 0.88.

The results above show that the nonaqueous electrolyte solutions according to the present embodiment containing the 1,2-dialkoxyethane having the fluorine-substituted alkyl group, and LiTFSI as well as the other lithium salt improve the cycle retention rate of the lithium-ion battery.

### (Example 8)

The storage characteristics of a lithium primary battery having the nonaqueous electrolyte solution according to the present embodiment were evaluated in the following manner:

The lithium primary battery was prepared in the following procedure. γ/B-MnO₂ (two-phase mixture of γ and β phases) was used as the positive electrode active material. A positive electrode plate was prepared in a similar manner to Example 4.

A lithium metal foil was used as the negative electrode plate, which was cut into pieces of 35 mmx35 mm in size, and a copper current collector plate of 0.5 mm in thickness having a lead was attached under pressure to the lithium metal foil obtained.

A nonaqueous electrolyte solution containing DEE and LiTFSI at a DEE/LiTFSI molar ratio of 1/1 was used.

The positive and negative electrode plates were placed at a position facing each other and holding a porous polyethylene film in between, and the positive and negative electrode plates were bound and integrated with a tape, to give an electrode unit. Then, the electrode unit was placed in a tube-shaped aluminum laminate bag having openings at both ends, and one opening in the lead region-sided end was sealed by welding. The nonaqueous electrolyte solution prepared was added dropwise through the other opening.

After the dropwise addition, the bag was deaerated at 1300 Pa for 5 seconds. The liquid injection-sided opening was sealed by welding, to give a lithium-primary battery

The lithium primary battery thus prepared was discharged preliminarily to a composition at a Li/Mn molar ratio of 0.05/1 under the condition of 20°C and 0.03 mA/cm². After the preliminary discharge, the battery was left at 60°C for one month, and the change in internal impedance between before and after storage was examined. The resistance, as determined at 10 kHz, was 2.3Ω before storage and 2.8Ω after storage.

### (Comparative Example 5)

A lithium primary battery was prepared in a similar manner to Example 8, except that a nonaqueous electrolyte solution containing EME and LiBF₄ at an EME/LiBF₄ molar ratio of 1/1 was used.

The lithium primary battery thus prepared was discharged preliminarily under the condition of 20°C and 0.03 mA/cm² to a composition at a Li/Mn molar ratio of 0.05/1. After the preliminary discharge, the battery was left at 60°C for one month, and the change in internal impedance between before and after storage was determined. The resistance, as determined at 10 kHz, was 1.9Ω before storage and 4.1Ω after storage. The internal impedance after storage was approximately 1.5 times higher than that in Example 8, and the increase seems to be caused by decomposition of EME or solubilization of MnO₂ due to HF, which was generated in reaction of a trace amount of water present in MnO₂ with LiBF₄,

### (Example 9)

An electrical double-layer capacitor having the nonaqueous electrolyte solution according to the present embodiment was evaluated in the following manner:

The polarizable electrode was prepared in the following procedure:

A phenol resin-based activated carbon powder having a specific surface area of 1,700 m²/g, acetylene black as a conductive substance, carboxymethylcellulose ammonium salt as a binder, and water and methanol as a dispersion solvent were mixed at a blending ratio of 10:2:1:100:40 by mass. The mixture was coated on one side of an aluminum-foil current collector having a thickness of 20 µm and dried, forming an active material layer having a thickness of 80 µm. The aluminum-foil current collector carrying the active material layer was cut into pieces of 35 mm×35 mm in size. An aluminum current collector plate of 0..5 mm in thickness having a lead was connected to the aluminum-foil current collector under ultrasonic irradiation.

The polarizable electrode thus prepared was used as the positive electrode, and an electrode of synthetic graphite powder prepared in a similar manner to Example 3 was used as the negative electrode. After a polypropylene nonwoven fabric separator was placed between the electrodes, the nonaqueous electrolyte solution was injected, and the entire unit was placed in an aluminum laminate tube, to give an electrical double-layer capacitor.

A nonaqueous electrolyte solution containing DME, DEE and LiTFSI at (DME+DEE)/LiTFSI molar ratio of (0.5+0.5)/1 was used as the electrolyte solution.

The electrical double-layer capacitor prepared was charged and discharged at 20°C, at a constant current of 0.3 mA/cm², and in a voltage range of 2.0 to 3.8 V, and the change in capacity was determined. The capacity retention rate, i.e., a value of the capacity in the 100th cycle divided by the 10th-cycle capacity, was 0.96.

### (Comparative Example 6)

An electrical double-layer capacitor was prepared in a similar manner to Example 9, except that a nonaqueous electrolyte solution containing EME and LiBF₄ at an EME/LiBF₄ molar ratio of 1/1 was used.

The electrical double-layer capacitor thus prepared was charged and discharged repeatedly at 20°C at a constant current of 0.3 mA/cm² in a voltage range of 2.0 to 3.8 V, and the capacity of the capacitor declined to almost zero after 54 cycles. It seems that the electrochemical potential of the negative electrode does not become lower during charge and thus, the electrochemical potential of the positive electrode, a polarizable electrode, becomes in the overcharged state, leading to oxidative decomposition of EME.

The results above show that the nonaqueous electrolyte solution according to the present embodiment gives an electrical double-layer capacitor having an extended cycle life.

As described above, an aspect of the present invention is a nonaqueous electrolyte solution being liquid at normal temperature, comprising (A) 1,2-dialkoxyethane represented by Formula: R-O-CH₂-CH₂-O-R' (wherein, R and R', which are same or different from each other, independently represent an unsubstituted or fluorine-substituted alkyl group having a carbon number of 3 or less) and (B) lithium bis[trifluoromethanesulfonyl]imide at a molar ratio [(A)/(B)] of 0.75 or more and 2 or less. In the configuration above, it is possible to obtain the nonaqueous electrolyte solution stable even at high temperature and higher in ion concentration that can give an electrochemical energy-storing device with high-energy density

In the nonaqueous electrolyte solution, the carbon number of each of the groups R and R' is preferably 2 or less. In the configuration above, it is possible to obtain the nonaqueous electrolyte solution with high ion concentration, because it is possible to raise the concentration of LiTFSI.

Further in the nonaqueous electrolyte solution, each of the groups R and R' is preferably a group selected from the group consisting of CH₃, C₂H₅, CF₃, and CH₂CF₃. In the configuration above, it is possible to raise the concentration af LiTFSI, because the 1,2-dialkoxyethane smaller in molecular weight is used as the nonaqueous solvent.

Further in the present invention, the nonaqueous electrolyte solution preferably contains at least one compound selected from the group consisting af MTFEE, ETFEE, and BTFEE as the 1,2-dialkoxyethane. In the configuration above, the 1,2-dialkoxyethane having a fluorine substituted alkyl group gives the nonaqueous electrolyte solution liquid at normal temperature easily and also gives the nonaqueous electrolyte solution superior in oxidative resistance.

Favorably in the present invention, the nonaqueous electrolyte solution containing the 1,2-dialkoxyethane having the fluorine-substituted alkyl group as the nonaqueous solvent contains additionally at least one compound selected from the group consisting of DME, DEE, and EME as the nonaqueous solvent. In the configuration above, it is possible to obtain the nonaqueous electrolyte solution with higher ion concentration, in case that the solution contains the 1,2-dialkoxyethane having the fluorine-substituted alkyl group as the nonaqueous solvent.

Favorably in the present invention, the nonaqueous electrolyte solution contains a carbonate compound as the nonaqueous solvent additionally. In the configuration above, it is possible to obtain the nonaqueous-electrolyte-solution battery having favorable cycle characteristics.

Favorably in the present invention, the nonaqueous electrolyte solution contains additionally at least one lithium salt selected from LiPF₆, LiBF₄, LiClO₄, lithium bis[pentafluoroethanesulfonyl]imide, lithium [trifluoromethanesulfonyl][nonafluorobutanesulfonyl]imide, lithium cyclohexafluoropropane-1,3-bis [sulfonyl]imide, lithium bis[oxalate (2-)]borate, lithium trifluoromethyl trifluoroborate, lithium pentafluoroethyl trifluoroborate, lithium heptafluoropropyl trifluoroborate, and lithium tris[Pentafluaroethyl]trifluorophosphate. In the configuration above, it is possible to obtain the nonaqueous-electrolyte -solution battery having favorable cycle characteristics.

Another aspect of the present invention is an electrochemical energy-storing device comprising a positive electrode, a negative electrode, and the nonaqueous electrolyte solution above, The nonaqueous electrolyte solution according to the present invention has a higher ion concentration and is also superior in stability, and thus in the configuration above, it is possible to obtain the electrochemical energy-storing device having high-energy density.

Yet another aspect of the present invention is a nonaqueous electrolyte solution secondary battery comprising a positive electrode, a negative electrode having graphite as the negative-electrode active material, and the nonaqueous electrolyte solution above. In the nonaqueous electrolyte solution according to the present invention, insertion and extraction of lithium ions into and out of graphite interlayer proceed smoothly without causing destruction of the graphite structure even at high ion concentration, and thus in the configuration above, it is possible to obtain the nonaqueous-electrolyte-solution secondary battery with high-energy density.

### Industrial Applicability

The present invention provides the nonaqueous electrolyte solution superior in stability that remains in the liquid state at normal temperature even at high ion concentration. Thus, it is possible to raise the energy density of the electrochemical energy-storing device, by using it as the electrolyte solution for example for the electrical double-layer capacitor or nonaqueous-electrolyte-solution battery.

Even in the lithium-ion battery having a negative electrode containing a graphite material as the negative-electrode active material, insertion and extraction of lithium ions proceed smoothly in the nonaqueous electrolyte solution containing the 1,2-dialkoxyethane as the nonaqueous solvent, enabling to increase in energy density of the lithium-ion battery.

## Claims

1. (amended) A nonaqueous electrolyte solution being liquid at normal temperature, comprising (A) 1,2-dialkoxyethane represented by Formula: R-O-CH₂-CH₂-O-R' (wherein, the groups R and R' may be same or different from each other; R represents a fluorine-substituted alkyl group having a carbon number of 3 or less; and R' represents an unsubstituted or fluorine-substituted alkyl group having a carbon number of 3 or less) and (B) lithium bis[trifluoromethanesulfonyl]imide at a molar ratio [(A)/(B)] of 0.75 or more and 2 or less.

2. The nonaqueous electrolyte solution according to Claim 1, wherein the carbon number of each of the groups R and R' is 2 or less.

3. (amended) The nonaqueous electrolyte solution according to Claim 1, wherein the fluorine-substituted alkyl group having a carbon number of 3 or less is a group selected from the group consisting of CF₃ and CH₂CF₃.

4. (amended) The nonaqueous electrolyte solution according to Claim 1, wherein the (A) 1,2-dialkoxyethane includes at least one compound selected from the group consisting of 1-methoxy-2-trifluoroethoxyethane, 1-ethoxy-2-trifluoroethoxyethane, and 1,2-bis[trifluoroethoxy]ethane.

5. The nonaqueous electrolyte solution according to Claim 4, further comprising at least one compound selected from the group consisting of 1,2-dimethoxyethane, 1,2-diethoxyethane, and 1-ethoxy-2-methoxyethane.

6. The nonaqueous electrolyte solution according to Claim 1, further comprising a carbonate compound as its nonaqueous solvent.

7. The nonaqueous electrolyte solution according to Claim 1, further comprising at least one compound selected from LiPF₆, LiBF₄, LiClO₄, lithium bis[pentafluoroethanesulfonyl]imide, lithium [trifluoromethanesulfonyl][nonafluorobutanesulfonyl]imide, lithium cyclohexafluoropropane-1,3-bis[sulfonyl]imide, lithium bis[oxalate (2-)]borate, lithium trifluoromethyl trifluoroborate, lithium pentafluoroethyl trifluoroborate, lithium heptafluoropropyl trifluoroborate, and lithium tris[pentafluoroethyl]trifluorophosphate as its lithium salt.

8. An electrochemical energy-storing device, comprising a positive electrode, a negative electrode, and the nonaqueous electrolyte solution according to Claim 1.

9. A nonaqueous-electrolyte-solution secondary battery, comprising a positive electrode, a negative electrode having graphite as the negative-electrode active material, and the nonaqueous electrolyte solution according to Claim 1,

10. (added) A nonaqueous electrolyte solution being liquid at normal temperature, comprising (A) 1,2-dialkoxyethane represented by Formula R-O-CH₂-CH₂-O-R' (wherein, the groups R and R' may be same or different from each other and each represent an unsubstituted alkyl group having a carbon number of 3 or less), (B) lithium bis[trifluoromethanesulfonyl]imide, and a carbonate compound, wherein the molar ratio [(A)/(B)] of the (A) 1,2-dialkoxyethane to the (B) lithium bis[trifluoromethanesulfonyl]imide is 0.75 or more and 2 or less, and the content of the carbonate compound is less than the total molar amount of the (A) 1,2-dialkoxyethanes,

11. (added) The nonaqueous electrolyte solution according to Claim 10, wherein the carbon number of each of the groups R and R' is 2 or less.

12. (added) The nonaqueous electrolyte solution according to Claim 10, wherein the unsubstituted alkyl group having a carbon number of 3 or less is a group selected from the group consisting of CH₃ and C₂H₅.

13. (added) The nonaqueous electrolyte solution according to Claim 10, wherein the (A) 1,2-dialkoxyethane includes at least one compound selected from the group consisting of 1,2-diethoxyethane and 1-ethoxy-2-methoxyethane.

14. (added) The nonaqueous electrolyte solution according to Claim 10, wherein the molar ratio of the carbonate compound to the (A) 1,2-dialkoxyethane [carbonate compound/1,2-dialkoxyethane] is 0.05 or more and 0.1 or less.

15. (added) An electrochemical energy-storing device, comprising a positive electrode, a negative electrode, and the nonaqueous electrolyte solution according to Claim 10.

16. (added) A nonaqueous-electrolyte-solution secondary battery, comprising a positive electrode, a negative electrode having graphite as the negative-electrode active material, and the nonaqueous electrolyte solution according to Claim 10.
